Europäisches Patentamt

European Patent Office

Office européen des brevets

(11) Publication number: **0 237 158**
**A1**

## (12) EUROPEAN PATENT APPLICATION

(21) Application number: **87300659.7**

(22) Date of filing: **27.01.87**

(51) Int. Cl.³: **F 16 D 55/14**

(30) Priority: **07.02.86 GB 8603107**

(43) Date of publication of application:
**16.09.87 Bulletin 87/38**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Green, Andrew Peter**
**22 Park View Pontnewydd**
**Cwmbran Gwent Wales(GB)**

(74) Representative: **Spall, Christopher John et al,**
**BARKER, BRETTELL & DUNCAN 138 Hagley Road**
**Edgbaston Birmingham B16 9PW(GB)**

(54) **Improvements in self-energising disc brakes.**

(57) In a self-energising disc brake of the spreading type which incorporates a mechanical mechanism (40), suitably for applying the brake for parking or in an emergency, spring means are incorporated for maintaining the mechanism under tension at all times. The spring means may comprise a tension spring (53, 56, 60), a torsion spring (63), or a compression spring (70), which acts to take up slack in the mechanism, namely lost-motion between the individual components of the mechanism.

FIG.1.

EP 0 237 158 A1

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the friction discs and centred by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart against the force in return springs acting between the pressure plates, due to the tendency for the balls or rollers to ride up ramps defined by the edges of the recesses, and into engagement with the friction discs which are urged into engagement with the braking surfaces, and the pressure plates are carried round with the friction discs until one is arrested by the engagement of a lug on the plate with a drag-taking stop abutment in the housing, the continued angular movement of the other pressure plate providing a servo action.

Self-energising brakes of the kind set forth may be dry or they may be of the liquid cooled type, and such brakes are commonly used in tractors and like vehicles and are hereinafter called brakes of the kind set forth.

Some self-energising brakes of the kind set forth are adapted to be actuated hydraulically for normal service braking, and mechanically by means of a mechanical mechanism, suitably for applying the brake for parking or in an emergency.

In some known constructions the mechanical mechanism comprises a pull-rod which extends into the brake through a radial opening in the housing and at its inner end is coupled to a pivotally mounted lever which is angularly movable in response to movement of the pull-rod in a generally radial direction in order to move the pressure plates angularly relative to each other to initiate application of the brake, and a slack adjuster may be incorporated in the transmission between the lever and a brake-applying member co-operating with the outer end of the pull-rod.

In such known constructions, during service braking the return springs acting between the pressure plates no longer act on the mechanical mechanism. This allows the mechanical mechanism to become slack, particularly as the linings wear, in turn allowing the ingress of dirt between the various components which could jeopardise safety.

According to our invention, a disc brake of the kind set forth incorporates a mechanical mechanism, and a spring means is incorporated for maintaining the mechanism under tension at all times.

The spring means takes up slack in the mechanism, namely lost-motion between the individual components of the mechanism.

The spring means may comprise a tension spring, torsion spring or a compression spring, which acts in a direction to subject the mechanism to tension.

When the mechanism comprises a pull-rod which extends into the brake through a radial opening in the housing and at its inner end is coupled to a lever which is angularly movable about a pivot to move the pressure plates angularly relative to each other to initiate application of the brake, the spring means may act on the lever in a direction to apply tension to the mechanism.

When the spring means comprises a tension spring the spring may act between the lever and the part on which it is pivotally mounted, suitably a lug on one of the pressure plates. Alternatively the tension spring may act between the lever and an anchorage on the other pressure plate.

When the spring means comprises a torsion spring the spring may encircle the pivot being anchored at opposite ends between the part on which the lever is pivotally mounted, and the lever itself.

When the spring means comprises a compression spring the spring may act between the lever and an abutment on the housing.

The compression spring may encircle the pull-rod which therefore acts to provide a convenient location for the spring.

Some embodiments of our invention are illustrated in the accompanying drawings in which:-

Figure 1 is an end view of a portion of a spreading brake;

Figure 2 is a view similar to Figure 1 but showing a modification;

Figure 3 is another view similar to Figure 1 but showing a different modification;

Figure 4 is another view similar to Figure 1 but showing a further different modification; and

Figure 5 is yet another view similar to Figure 1 but showing yet a further, different, modification.

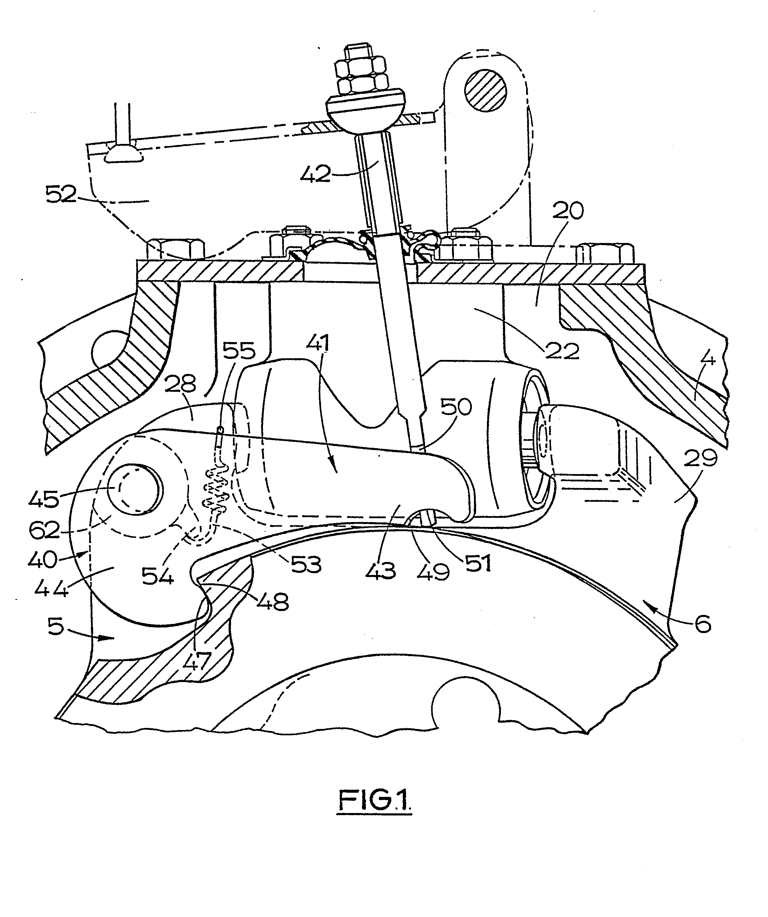

The brake illustrated in Figure 1 of the drawings is of a conventional spreading type in which two rotatable friction discs provided with friction linings and splined on a shaft are adapted to be brought into engagement with spaced opposed radial braking surfaces in a housing 4 by pressure plates 5, 6 located between the discs and centred by three angularly spaced stationary pilots. Balls are located in co-operating oppositely inclined recesses in the adjacent faces of the pressure plates 5, 6.

The application of the brake is initiated by moving the pressure plates 5, 6 angularly in opposite directions which causes the pressure plates 5, 6 to move axially relatively away from each other due to the tendency for the balls to ride up ramps defined by the end faces of the recesses. This urges the friction discs into engagement with the opposed radial faces in the housing 4. The pressure plates 5, 6 are then carried round with the discs until one is arrested by the engagement of a lug on a respective plate 5, 6 with a drag-taking abutment conveniently constituted by one of the pilots, whereafter continued angular movement of the other plate provides a servo action.

A radial opening 20 in the housing 4 provides a mounting for an hydraulic actuator 22 by means of which the brake is adapted to be applied hydraulically.

The hydraulic actuator 22 conveniently forms the subject of our co-pending patent application No 8506163 and need not be described further except for stating that the actuator 22 has an open-ended longitudinal through-bore in which work a pair of oppositely acting pistons for engagement with lugs 28, 29 on the plates 5, 6.

A mechanical brake-applying mechanism 40 is provided for applying the brake manually for parking or in an emergency. As illustrated the mechanism 40 comprises a lever 41 in the form of a bell-crank, and a pull-rod 42 coupled to the lever 41.

The lever 41 has a longer arm 43 and a shorter arm 44 and is pivotally connected to the lug 28 by means of a pivot pin 45 comprising a portion of increased diameter on the shank of a bolt which passes through an opening in the lug 28. The shorter arm 44 extends in a generally radial direction and is provided with a curved nose 47 which has a rolling engagement with a radial face 48 on the pressure plate 6.

The longer arm 43 extends in a generally circumferential direction and adjacent to its free end a notch 49 of arcuate outline is provided in the radially innermost edge of the lever 40.

The pull-rod 42 is provided at its inner end with a loop 50 in the form of an eye which encircles the free end of the arm 43. A bearing face 51 of arcuate outline comprising the inner side of the outermost end of the loop 50 has a rocking and sliding engagement with a complementary arcuate face defining the notch 49.

When the brake is to be applied by the mechanism 40, the pull-rod 42 is withdrawn relatively from the housing in a generally radial direction to urge the lever 41 angularly about the pin 45 as a pivot. This is achieved by a pedal, hand-lever, or the like operating on the lever 41 through a suitable linkage including a lever 52 pivotally mounted on the housing 4. The nose 47 acts on the face 48 to urge the plate 6 in one direction, and the reaction on the pin 45 acts to urge the plate 5 in the opposite direction. Relative angular movement between the plates 5, 6 in opposite directions initiates application of the brake as described above.

A tension spring 53 is attached at opposite ends between an anchorage 54 comprising a radial projection on the pivot pin 45 and a notch 55 in the face of the lever 41 facing the opening 20 and at an intermediate point in the length of the arm 43.

The spring 53 acts to urge the lever 41 in a clockwise direction with respect to the pivot pin 45 in order to take up any slack between individual components and maintain the mechanical brake-applying mechanism 40 under tension at all times.

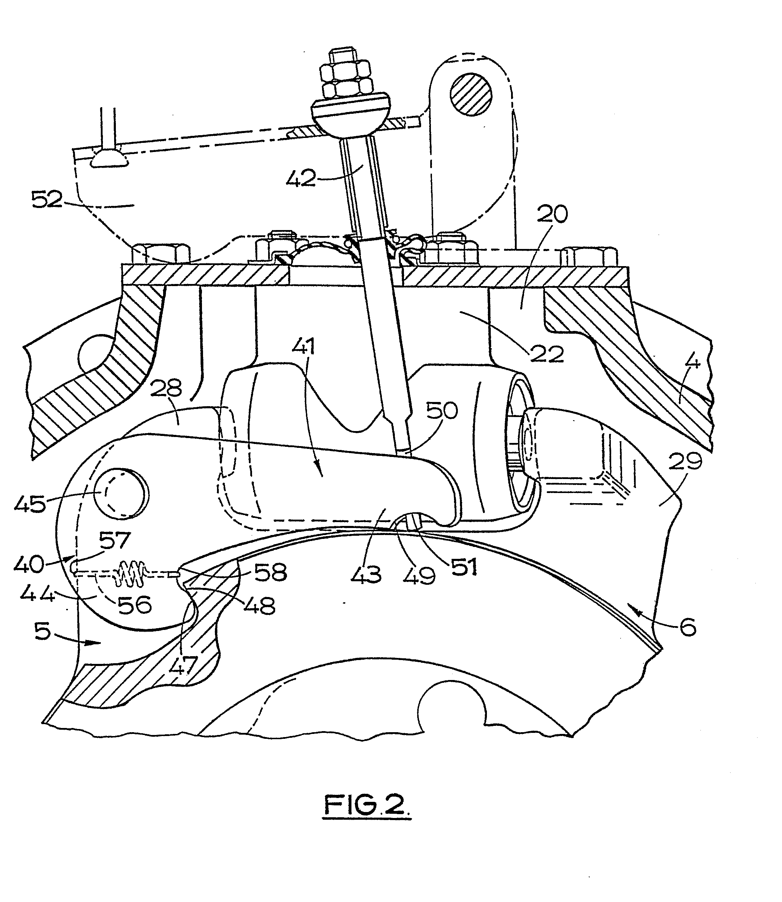

In the brake illustrated in Figure 2 of the drawings a tension spring 56 acts between an anchorage 57 on the outer face of the lug 28 and an anchorage 58 on the arm 44 at the intersection of the curved face 47 with the longer arm 43. Again the spring 56 acts to urge the lever 41 in a clockwise direction.

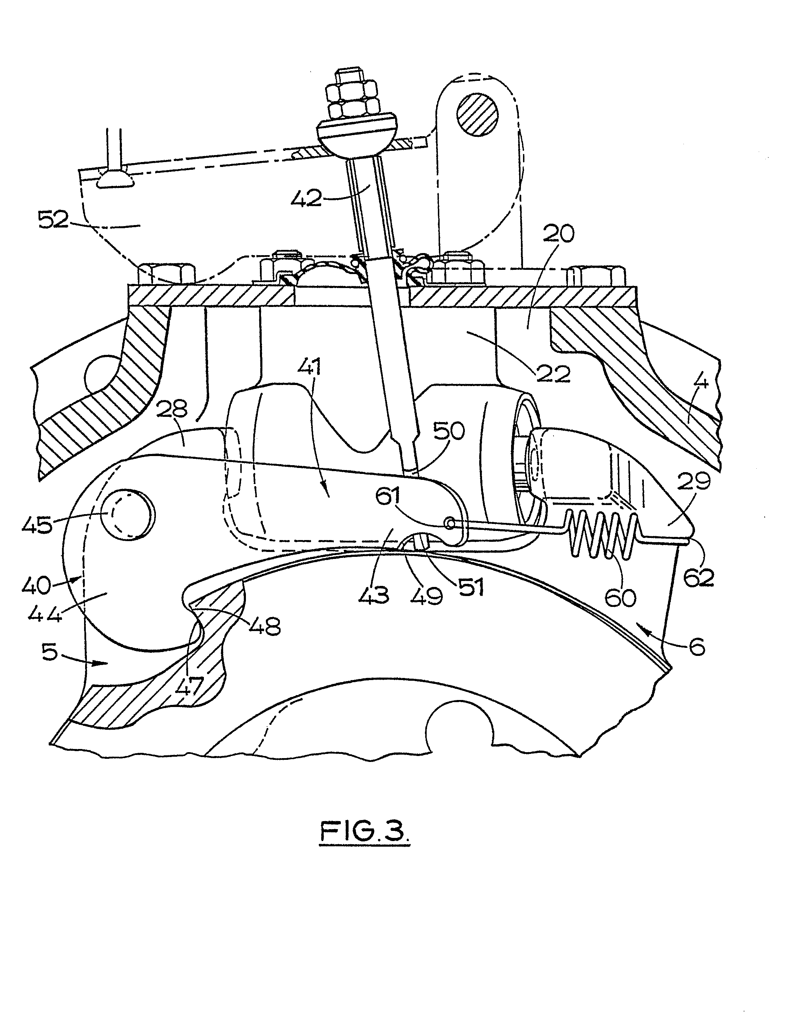

In the brake illustrated in Figure 3 of the drawings a tension spring 60 acts between an anchorage 61 of the free end of the longer arm 43 and an anchorage 62 in the lug 29 of the pressure plate 6. The radial position of the anchorage 61 is again chosen so that the tension spring 60 acts to urge the lever 41 is a clockwise direction.

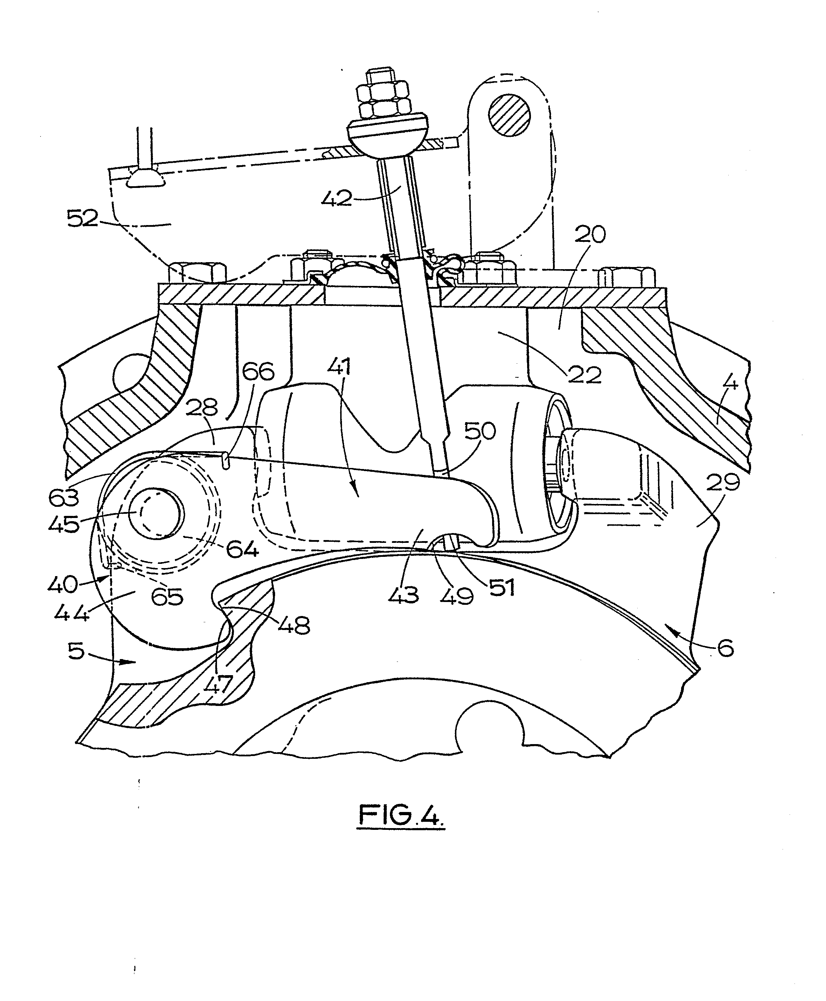

In the brake illustrated in Figure 4 of the drawings the lever 41 is again biassed in a clockwise direction by means of a torsion spring 63 which encircles a boss 64 on the lug 5 and is anchored at opposite ends on anchorages 65 and 66 on the lug 5 and on the longer arm 43 of the lever 41, respectively.

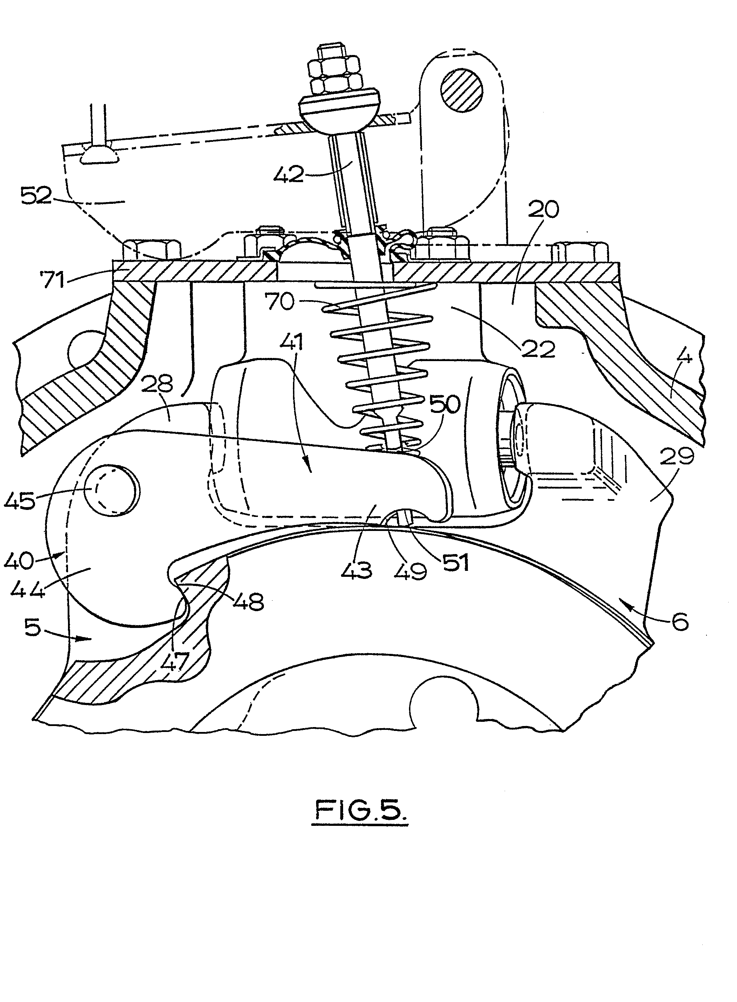

In the brake illustrated in Figure 5 of the drawings the lever 41 is biassed by means of a compression spring 70 which encircles the pull-rod 42 and abuts at opposite ends between the longer arm 43 of the lever 41 and a plate 71 which closes the opening 20 and which forms a mounting for the hydraulic actuator 22. In this construction the compression spring 70 also acts to prevent accidental disassembly of the loop 50 from the notch 49.

Apart from the biassing of the lever 41, the construction of the brakes of Figures 1-5 are the same, and corresponding reference numerals have been applied to corresponding parts.

In the brake described above the housing 4 may comprise a portion of the axle trumpet of a vehicle. The mechanical brake-applying mechanism is therefore substantially protected for corrosion.

## CLAIMS

1. A self-energising disc brake which rotatable friction discs provided with linings of friction material are adapted to be brought into engagement with spaced opposed braking surfaces in a housing (4) by pressure plates (5, 6) located between the friction discs and centred by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart against the force in return springs acting between the pressure plates, due to the tendency for the balls or rollers to ride up ramps defined by the edges of the recesses, and into engagement with the friction discs which are urged into engagement with the braking surfaces, and the pressure plates are carried round with the friction discs until one is arrested by the engagement of a lug on the plate with a drag-taking stop abutment in the housing, the continued angular movement of the other pressure plate providing a servo action, in which the brake incorporates a mechanical mechanism (40), characterised in that a spring means (53, 56, 60, 63, 70) is incorporated for maintaining the mechanism under tension at all times.

2. A disc brake according to claim 1, characterised in that the spring means comprises a tension spring (53, 56, 60).

3. A disc brake according to claim 1, characterised in that the spring means comprises a torsion spring (63).

4. A disc brake according to claim 1, characterised in that the spring means comprises a compression spring (70).

5. A disc brake according to any preceding claim characterised in that the mechanism (40) comprises a pull-rod (42) which extends through a radial opening (20) in the housing and at its inner end is coupled to a lever (41) which is angularly movable about a pivot (45) to move the pressure plates (5, 6) angularly relative to each other to initiate application of the brake, and the spring means acts on the lever in a direction to apply tension to the mechanism.

6. A disc brake according to claim 5, characterised in that the spring means comprises a tension spring (53, 56) which acts between the lever (41) and the part (55, 57) on which it is pivotally mounted.

7. A disc brake according to claim 6, characterised in that the tension spring (58) acts on a lug (28) on one of the plates.

8. A disc brake according to claim 6 characterised in that the tension spring acts between the lever (41) and an anchorage (62) on the other pressure plate (6).

9. A disc brake according to claim 5, characterised in that the spring means comprises a torsion spring (63) which encircles the pivot (45), being anchored at opposite ends between the part on which the lever is pivotally mounted, and the lever itself.

10. A disc brake according to claim 5, characterised in that the spring means comprises a compression spring (70) which acts between the lever (41) and an abutment (71) on the housing, and the compression spring encircles the pull-rod (42).

FIG.1.

FIG.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 031 083 (LUCAS INDUSTRIES LTD) * Whole document; figures 1-10 * | 1 | F 16 D 55/14 |
| A | GB-A-2 036 899 (LUCAS INDUSTRIES LTD) | | |
| A | GB-A-1 575 676 (KLÖCKNER-HUMBOLDT-DEUTZ AKTIENGESELLSCHAFT) | | |
| A | GB-A-2 014 261 (GIRLING LTD) | | |
| A | GB-A- 975 094 (MASSEY-FERGUSON INC.) | | TECHNICAL FIELDS SEARCHED (Int. Cl.4) |
| A | GB-A-1 182 729 (LAMBERT BRAKE CORP.) | | F 16 D 55/00 |
| A,P | EP-A-0 192 395 (LUCAS INDUSTRIES PUBLIC LTD CO.) | | |
| A,P | EP-A-0 196 766 (LUCAS INDUSTRIES PUBLIC LTD CO.) | | |

The present search report has been drawn up for all claims

| Place of search | Date of completion of the search | Examiner |
|---|---|---|
| THE HAGUE | 14-05-1987 | BRAEMS C.G.I. |